(19) Europäisches Patentamt
European Patent Office
Office européen des brevets

(11) Veröffentlichungsnummer: **0 494 443 A1**

# (12) EUROPÄISCHE PATENTANMELDUNG

(21) Anmeldenummer: **91122155.4**

(22) Anmeldetag: **23.12.91**

(51) Int. Cl.⁵: **C08J 9/08**

(30) Priorität: **05.01.91 DE 4100199**

(43) Veröffentlichungstag der Anmeldung: **15.07.92 Patentblatt 92/29**

(84) Benannte Vertragsstaaten: **DE FR GB IT NL**

(71) Anmelder: **BAYER AG**
**W-5090 Leverkusen 1 Bayerwerk(DE)**

(72) Erfinder: **Köhler, Burkhard, Dr.**
**Mündelheimer Strasse 94**
**W-4150 Krefeld 11(DE)**
Erfinder: **Ebert, Wolfgang, Dr.**
**Doerperhofstrasse 31**
**W-4150 Krefeld 1(DE)**
Erfinder: **Elsner, Thomas, Dr.**
**Südallee 70**
**W-4000 Düsseldorf 13(DE)**
Erfinder: **Horn, Klaus, Dr.**
**Bodelschwinghstrasse 12**
**W-4150 Krefeld 1(DE)**
Erfinder: **Döring, Joachim, Dr.**
**Bayer Japan Ltd., 108 Takanawa 4-chome, Minatoku**
**Tokyo 108(JP)**
Erfinder: **Timmermann, Ralf, Dr.**
**Weggenhofstrasse 6**
**W-4150 Krefeld(DE)**
Erfinder: **Pielartzik, Harald, Dr.**
**c/o Mobay Corporation, 1835 Tilton Drive**
**Pittsburgh, PA 15241-2636(US)**

## (54) Verwendung von thermoplastischen Polycarbonaten zum Verschäumen von anderen Thermoplasten.

(57) Gegenstand der vorliegenden Erfindung ist die Verwendung von thermoplastischen Polycarbonaten zum Verschäumen von anderen Thermoplasten, ein Verfahren zur Herstellung von Schaumformkörpern sowie die erfindungsgemäß erhältlichen Schaumformkörper.

EP 0 494 443 A1

Gegenstand der vorliegenden Erfindung ist die Verwendung von thermoplastischen Polycarbonaten zum Verschäumen von anderen Thermoplasten, wobei die thermoplastischen Polycarbonate in Mengen von 0,2 bis 20, vorzugsweise von 1 bis 10 Gew.-Teilen, bezogen auf 100 Gew.-Teile der Mischung aus anderem Thermoplast und Polycarbonat, eingesetzt werden.

Wie in der US-A 38 88 801 beschrieben, wurden Hydrazodicarboxylate allgemein als Treib- und Blasmittel für verschiedenartige, thermoplastische, organische Polymere verwendet. Andere Treibmittel sind 5-Phenyltetrazol und Benzamide, vergl. US-PS 37 81 233 und US-PS 37 79 954. Die EP-A 158 212 beschreibt die Verwendung von Mono- und Diestern der Zitronensäure zur Herstellung von Kunststoffschäumen.

Auch das Verschäumen von Polycarbonaten ist bekannt, wobei als Treibmittel solche vorzuziehen sind, die ein inertes Gas wie Stickstoff oder Kohlendioxid abspalten (siehe beispielsweise DE-AS 1 031 507 und DE-OS 2 434 085).

Bekannt ist auch die Verwendung von Oxalsäure als Treibmittel (siehe US-PS 3 277 029).

Polycarbonate als Treibmittel zum Verschäumen zu verwenden ist möglich, wenn man durch kontrollierten, partiellen Abbau des Polycarbonats $CO_2$ freisetzt und dieses zum Verschäumen des restlichen Polycarbonats und der anderen Thermoplasten nutzt.

Der kontrollierte Abbau des Polycarbonats erfolgt durch den Zusatz von Umesterungskatalysatoren in Kombination mit aromatischen Polycarbonsäuren und/oder mit $H_2O$, wobei bei Einsatz von $H_2O$ ohne aromatische Polycarbonsäuren aliphatische Hydroxycarbonsäuren und/oder aliphatische Alkohole mit dem Zusatz des $H_2O$ kombiniert werden können.

Bekannt ist der Abbau von Polycarbonaten unter Freisetzung von $CO_2$ unter dem Einfluß von Säuren (siehe DE-AS 1 260 479), auch in Kombination mit Katalysatoren (siehe EP- 0 127 842 und US-PS 4 338 422).

Bekannt ist aber auch, Polycarbonate durch den Zusatz von Säuren zu stabilisieren, und zwar gegen die Einwirkung von Feuchtigkeit (siehe US-PS 3 951 903) sowie gegen Bestrahlung (EP-0 353 776).

Der Zusatz von Fettsäuren als Entformungsmittel für Polycarbonate ist ebenfalls bekannt (siehe US-PS 4 409 351 und US-PS 4 408 000). Hierbei tritt jedoch ebenfalls Abbau des Polycarbonats auf (siehe DE-OS 3 704 666, Vergleichsbeispiel 2 und Jp-Sho 47-41092).

Die Verwendung von Polycarbonaten als Treibmittel zum Verschäumen von Thermoplasten ist jedoch auch in diesen Literaturstellen weder beschrieben noch nahegelegt.

Aus der DE-OS 33 25 702 sind Mischungen aus Polycarbonaten, Pfropfpolymerisaten und polymeren ansäuernden Mitteln bekannt, die eine verbesserte Stabilität und Schlagzähigkeit haben.

Thermoplastische aromatische Polycarbonate im Sinne der vorliegenden Erfindung sind Polycarbonate, die nach den üblichen, in der Literatur bekannten Methoden aus Diphenolen und Carbonatspendern hergestellt worden sind (siehe beispielsweise H. Schnell, Chemistry and Physics of Polycarbonates, Interscience Publishers, New York, 1964", US-Patent 3 028 365 und DE-OS 3 832 396.

Diphenole für solche Polycarbonate können beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen sein.

Bevorzugte Diphenole sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind beispielsweise 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Die Diphenole können sowohl allein als auch im Gemisch miteinander verwendet werden, es sich also sowohl Homopolycarbonate als auch Copolycarbonate einbezogen. Die Diphenole sind literaturbekannt oder nach literaturbekannten Verfahren herstellbar.

Es können auch geringe Mengen, vorzugsweise Mengen zwischen 0,05 und 2,0 Mol-%, bezogen auf die Mole eingesetzter Diphenole, an tri- oder mehr als trifunktionellen Verbindungen, insbesondere solchen mit drei oder mehr als drei phenolischen Hydroxylgruppen, mitverwendet werden. Einige der verwendbaren Verbindungen mit drei oder mehr als drei phenolischen Hydroxylgruppen sind beispielsweise

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis(2-hydroxy-5'-methyl-benzyl)-4-methylphenol,
2-(4-Hydroxyphenyl)-2-(3,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan
und
1,4-Bis-(4',4''-dihydroxytriphenyl)-methyl-benzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern können entweder mit den Diphenolen selbst und den Molekulargewichtsreglern in der wäßrigen alkalischen Phase vorgelegt werden, oder in einem organischen Lösungsmittel gelöst vor der Phosgenierung, zugegeben werden.

Geeignete Molekulargewichtsregler sind die bekannten, vorzugsweise Monophenole.

Die aromatischen Polycarbonate gemäß vorliegender Erfindung sollen Gewichtsmittelmolekulargewichte $\overline{M}w$ (ermittelt durch Gelpermeationschromatographie) zwischen 5000 und 50000, vorzugsweise zwischen 15000 und 35000 haben.

Die Lösungsviskositäten liegen entsprechend zwischen 1,15 und 1,35, gemessen in Dichlormethan (0,5 g/100 ml).

Geeignete andere Thermoplasten sind im Prinzip alle, die unter den Verschäumungsbedingungen nicht wesentlich abbauen, also beispielsweise

Polyarylensulfide, wie sie in EP-A 171 021 oder US-A 33 54 129 beschrieben sind,
Polyethersulfone, wie sie in DE-A 15 45 106 oder DE-A 27 31 816 beschrieben sind,
Polyarylenether, wie sie in US-A 33 06 874, US-A 33 06 875 oder DE-A 32 12 925 beschrieben sind oder deren Blends mit Polystyrol, Polyetherketone, wie sie in EP-A 1879 beschrieben sind,
flüssigkristalline, aromatische Polyester oder Polyestercarbonate, wie sie in EP-A 102 719, EP-A 134 204, EP-A 63 880, EP-A 67 032, EP-A 15 856, EP-A 132 637, DE-A 27 04 315, US-A 43 71 600 oder US-A 44 35 561 beschrieben sind,
Polyamide, wie sie in EP-A 38 473, US-A 44 71 081, DE-A 33 06 906 oder GB-A 997 316 beschrieben sind,
oder
Polyester, wie sie in DE-A 23 39 249 oder NL-A 46 07 013 eingesetzt werden.

Erfindungsgemäß geeignete Umesterungskatalysatoren sind alle für die Umesterung von Kohlensäureestern beziehungsweise Carbonsäureestern bekannten Verbindungen, wie Metalloxide, Metallhydroxide, Metall alkoxide, Carbonsäureverbindungen von Metallen oder Organometallverbindungen, aber auch 5-gliedrige Stickstoff-haltige Heterocyclen, Amidine, tertiäre Amine und deren Salze und Tetraalkylammoniumhydroxide und Alkali- oder Tetraalkylammonium-tetraphenylboranate.

Geeignete Metalle sind die der ersten Haupt- und Nebengruppe, der zweiten Haupt- und Nebengruppe, der dritten Hauptgruppe, der vierten Haupt- und Nebengruppe, der fünften Hauptgruppe, der sechsten Nebengruppe und der siebten und achten Nebengruppen.

Bevorzugte Umesterungskatalysatoren sind Dibutylzinnoxid, Dibutylzinndilaurat, $SnO_2$, MgO, CaO, $Ca(OH)_2$, Tetrabutoxyorthotitanat, Zinkacetat, Diazabicycloundecen, Diazabicyclononen, DABCO, Imidazol, Tetramethylammoniumhydroxid, Natriumhydroxid, Kaliumhydroxyd, Benzimidazol, Ammoniak, Piperazin Bleiacetat, PbO, $Sb_2O_3$, Eisenacetylacetonat, Cobaltacetat, Triethylammoniumchlorid, Natrium-tetraphenylboranat und Tetrabutylammonium-tetraphenylboranat.

Die Umesterungskatalysatoren werden in Mengen von 0,01 Mol-% bis 1 Mol-%, bezogen auf molare, aromatische Carbonatstruktureinheit

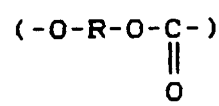

des anwesenden Polycarbonats eingesetzt. Bevorzugte Molmengen an Umesterungskatalysatoren sind 0,04-0,1 Mol-%.

Der Rest -O-R-O- ist hierbei der Rest eines Diphenolats`

Geeignete aromatische Polycarbonsäuren sind insbesondere aromatische Tricarbonsäuren, vor allem solche, deren Carboxylgruppen nicht zur Ausbildung eines 5-Ring- oder 6-Ring-Dianhydrids befähigt sind`

Geeignete Polycarbonsäuren sind beispielsweise Trimesinsäure, Isophthalsäure, Terephthalsäure, 3,3'-, 4,4'- oder 3,3'-Diphenyletherdicarbonsäure, 2,6-Naphthalindicarbonsäure, Trimellithsäure, 1,4,5,8-Naphthalintetracarbonsäure, 3,3',4,4'-Benzophenontetracarbonsäure, 2,2',4,4'-Diphenylsulfontetracarbonsäure, Phthalsäure und 2,2',4,4'-Diphenylethertetracarbonsäure, aber auch aromatische Hydroxypolycarbonsäuren wie 3- oder 4-Hydroxyphthalsäure, Hydroxyterephthalsäure und 2,5-Dihydroxyterephthalsäure. Bevorzugte Polycarbonsäure ist die Trimesinsäure.

Die aromatischen Polycarbonsäuren werden in Mengen von 0,1 Mol-% bis 5 Mol-%, vorzugsweise von 0,5 Mol-% bis 2 Mol-%, bezogen wieder auf molare aromatische Carbonatstruktureinheit

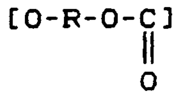

des anwesenden Polycarbonats eingesetzt.

Geeignete Hydroxycarbonsäuren sind Zitronensäure und ihre Mono- oder Dialkylester, Glyoxylsäure, Milchsäure, ε-Hydroxycapronsäure, γ-Hydroxybuttersäure, Apfelsäure oder Weinsäure.

Sie werden zu Mengen von 0,1 Mol-% bis 2 Mol-%, vorzugsweise 0,2 Mol-% bis 1 Mol-%, bezogen wieder auf molare, aromatische Carbonatstruktureinheit

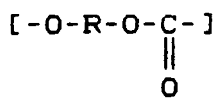

des anwesenden Polycarbonats eingesetzt.

Geeignete aliphatische Alkohole sind aliphatische Di-, Tri-, Tetra-alkohole und aliphatische Alkohole mit mehr als 4 alkoholischen OH-Gruppen.

Geeignete aliphatische Alkohole sind beispielsweise Ethylenglykol, Butandiol, Propylenglykol, Aidpol, Glycerin, Trimethylolpropan, Neopentylglykol, Pentaerythrit, Mannit und Sorbit, sowie polymere Alkohole wie Polyethylenglykol, Polytetrahydrofuran und Polypropylenglykol mit vorzugsweise einem $\overline{M}n$ von kleiner 5000, wobei $\overline{M}n$ in bekannter weise mittels Bestimmung der OH-Endgruppen ermittelt ist.

Bevorzugter Alkohol ist Pentaerythrit.

Die aliphatischen Alkohole werden in Mengen von 0,1 Mol-% bis 5 Mol-%, vorzugsweise in Mengen von 0,2 Mol-% bis 2 Mol-%, bezogen wieder auf molare, aromatische Carbonatstruktureinheiten

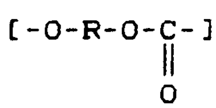

des anwesenden Polycarbonats eingesetzt.

Die Wassermenge beträgt 0,1 Mol-% bis 5 Mol-%, vorzugsweise 0,2 Mol-% bis 2 Mol-%, bezogen auf molare, aromatische Carbonatstruktureinheiten

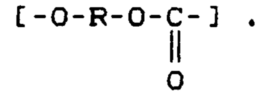

Die Verschäumung der anderen Thermoplasten erfolgt in der Weise, daß man die thermoplastischen Polycarbonate vorab mit den Agenzien für den kontrollierten Abbau vermischt und diese Mischung danach mit den anderen Thermoplasten vermischt.

Die Einarbeitung der Umesterungskatalysatoren in Kombination mit den aromatischen Polycarbonsäuren und/oder mit $H_2O$, gegebenenfalls unter Mitverwendung von aliphatischen Hydroxycarbonsäuren und/oder aliphatischen Alkoholen, erfolgt in geeigneten Mischern bei Temperaturen von 220 °C bis 320 °C, vorzugsweise von 240 °C.

Danach schließt sich die Vermischung mit den anderen Thermoplasten beispielsweise in Trommelmischern bei Temperaturen zwischen 0 °C und 100 °C an.

Danach wird die jeweilige Mischung durch Spritzguß oder Extrusion bei Temperaturen von 200 °C bis 450 °C, vorzugsweise von 220 °C bis 300 °C zu Schaumformkörpern verarbeitet, wobei Reaktionszeiten von 0,5 Min. bis 5 Min., vorzugsweise von 1 Min. bis 2 Min. eingehalten werden.

Die erfindungsgemäß erhaltenen Schaumformkörper zeichnen sich durch helle Eigenfarbe, gleichmäßige feine Schaumstruktur und glatte Oberfläche aus.

Gegenstand der vorliegenden Erfindung ist somit auch ein Verfahren zur Herstellung von Schaumformkörpern, das dadurch gekennzeichnet ist, daß man thermoplastische Polycarbonate mit mittleren Gewichtsmittelmolekulargewichten $\overline{M}w$ von 5000 bis 50000, vorzugsweise von 15000 bis 35000, mit Umesterungskatalysatoren in Mengen von 0,01 Mol-% bis 1 Mol-%, in Kombination mit aromatischen Polycarbonsäuren in Mengen von 0,1 Mol-% bis 5 Mol-% und/oder in Kombination mit $H_2O$ in Mengen von 0,1 Mol-% bis 5 Mol-%, gegebenenfalls unter Mitverwendung von aliphatischen Hydroxycarbonsäuren und/oder von aliphatischen Alkoholen in Mengen von 0,1 Mol-% bis 5 Mol-%, bezogen in allen Fällen auf molare, aromatische Carbonatstruktureinheiten

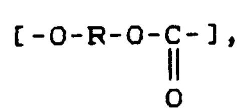

worin -O-R-O-, ein Diphenolat-Rest ist, in geeigneten Mischern vermischt, danach diese Mischung mit anderen Thermoplasten im Gewichtsverhältnis thermoplastischer Polycarbonat zu anderem Thermoplast zwischen 0,2:99,8 und 20:80, vorzugsweise zwischen 1:99 und 10:90 vermischt und danach die erhaltene Mischung durch Spritzguß oder Extrusion bei Temperaturen von 200 °C bis 450 °C zu Schaumformkörpern verarbeitet, wobei Reaktionszeiten von 0,5 Minuten bis 5 Minuten, vorzugsweise von 1 Minute bis 2 Minuten eingehalten werden.

Gegenstand der vorliegenden Erfindung sind auch die erfindungsgemäß erhältlichen Schaumformkörper.

Das erfindungsgemäße Verschäumungsverfahren kann noch unter Zusatz von für die Schaumherstellung üblichen Additiven wie Verstärkungsstoffen, beispielsweise Glasfasern, und/oder Nucleierungsmitteln und/oder Flammschutzmitteln und/oder Entformungsmitteln und/oder Farbstoffen und/oder Pigmenten, beispielsweise Rutil oder Ruß, und/oder Stabilisatoren gegen Hitze und UV-Strahlung durchgeführt werden.

Gegenstand der vorliegenden Erfindung ist somit auch die Erweiterung des erfindungsgemäßen Verfahrens unter Einbeziehung eines oder mehrerer dieser Additive.

Gegenstand der vorliegenden Erfindung sind außerdem die nach diesem erfindungsgemäßen Verfahren erhältlichen, Additiv-haltigen Schaumformkörper.

Die erfindungsgemäß erhältlichen Schaumformkörper können als Formteile zur Herstellung großflächiger Abdeckungen von Lampen, Gehäusen, Bürogeräten oder zur Herstellung großflächiger Schrankelemente eingesetzt werden.

## Beispiele

### Beispiel 1

Man mischt auf einem Trommelmischer 95 Teile eines flüssigkristallinen, aromatischen Polyestercarbonats, der aus 0,68 eq. p-Hydroxybenzoesäure, 0,28 eq. Hydrochinon, 0,04 eq. 4,4'-Dihydroxybiphenyl, 0,027 eq. Terephthalsäure und 0,293 eq. Carbonatester nach dem Diphenylcarbonatverfahren (EP-A 132 637) hergestellt wurde, und 5 Teile eines Gemisches aus 79 % Polycarbonat, 19 % Trimesinsäure und 2 % Dibutylzinnoxid.

Man extrudiert auf einem Stork-Einwellenextruder (270 °C, D = 25 mm, Länge L = 25 D) und erhält einen geschäumten Polymerstrang mit einer Dichte von 0,7 g/cm$^3$.

### Beispiel 2

Man mischt auf einem Trommelmischer 95 Teile eines Polyphenylensulfids (40 Pas, 1000 l/s, 306 °C), das nach EP-A 171 021 hergestellt wurde, und 5 Teile des in Beispiel 1 beschriebenen Gemisches.

Man extrudiert analog der Beschreibung von Beispiel 1 bei 310 °C und erhält einen geschäumten Polymerstrang mit einer Dichte von 0,75 g/cm$^3$.

## Patentansprüche

1. Verwendung von thermoplastischen Polycarbonaten zum Verschäumen von anderen Thermoplasten, wobei die thermoplastischen Polycarbonate in Mengen von 0,2 bis 20 Gew.-Teilen, bezogen auf 100 Gew.-Teile der Mischung aus anderem Thermoplast und Polycarbonat, eingesetzt werden.

2. Verfahren zur Herstellung von Schaumformkörpern, dadurch gekennzeichnet, daß man thermoplastische Polycarbonate mit mittleren Gewichtsmittelmolekulargewichten $\overline{M}w$ von 5000 bis 50000 mit Umesterungskatalysatoren in Mengen von 0,01 Mol-% bis 1 Mol-%, in Kombination mit aromatischen Polycarbonsäuren in Mengen von 0,1 Mol-% bis 5 Mol-% und/oder in Kombination mit $H_2O$ in Mengen von 0,1 Mol-% bis 5 Mol-%, gegebenenfalls unter Mitverwendung von aliphatischen Hydroxycarbonsäuren und/oder von aliphatischen Alkoholen in Mengen von 0,1 Mol-% bis 5 Mol-%, bezogen in allen Fällen auf Mole, aromatische Carbonatstruktureinheiten

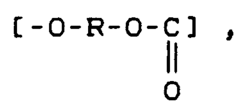

worin -O-R-O- ein Diphenolatrest ist, in geeigneten Mischern vermischt, danach diese Mischung mit anderen Thermoplasten im Gewichtsverhältnis thermoplastisches Polycarbonat zu anderem Thermoplast zwischen 0,2:99,8 und 20:80 vermischt und danach die erhaltene Mischung durch Spritzguß oder Extrusion bei Temperaturen von 200 °C bis 450 °C zu Schaumformkörpern verarbeitet, wobei Reaktionszeiten von 0,5 Minuten bis 5 Minuten eingehalten werden.

3. Schaumformkörper, erhältlich nach dem Verfahren des Anspruchs 2.

4. Verfahren gemäß Anspruch 2, dadurch gekennzeichnet, daß ein oder mehrere übliche Additive einbezogen werden.

5. Additiv-haltige Schaumformkörper erhältlich

nach dem Verfahren des Anspruchs 4.

Europäisches Patentamt

# EUROPÄISCHER RECHERCHENBERICHT

Nummer der Anmeldung

EP 91 12 2155

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CHEMICAL ABSTRACTS, Band 87, Nr. 8, 22. August 1977, Seite 49, Zusammenfassung Nr. 54238y, Columbus, Ohio, US;& JP-A-77 50 367 (TEIJIN LTD) 22-04-1977 * Zusammenfassung * | 1,2,3 | C 08 J 9/08 |
| X | EP-A-0 115 162 (MOBIL OIL CORP.) * Patentansprüche 1,5,7,12-14; Seite 9, Zeile 24 - Seite 10, Zeile 2; Seite 20, Zeilen 11-20 * | 1 | |
| Y | | 1-5 | |
| D,Y | EP-A-0 127 842 (BAYER AG) * Seite 1, Zeile 10 - Seite 2, Zeile 2; Seite 5, Zeilen 11-24; Seite 6, Zeile 18 - Seite 7, Zeile 15; Seite 22, Zeilen 8-21 * | 1-5 | |
| X | US-A-4 940 733 (KUPHAL et al.) * Patentansprüche 1,12,19; Beispeile; Spalte 5, Zeilen 11-29; Spalte 5, Zeile 42 - Spalte 6, Zeile 31 * | 1 | RECHERCHIERTE SACHGEBIETE (Int. Cl.5) |
| A | | 2 | C 08 J |
| X | US-A-4 710 522 (M.T. HUGGARD) * Patentansprüche; Beispiele; Spalte 5, Zeilen 34-36; Spalte 6, Zeile 42 - Spalte 7, Zeile 46 * | 1 | |

Der vorliegende Recherchenbericht wurde für alle Patentansprüche erstellt

| Recherchenort | Abschlußdatum der Recherche | Prüfer |
|---|---|---|
| DEN HAAG | 19-03-1992 | NIAOUNAKIS M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)